Europäisches Patentamt

**19** European Patent Office

Office européen des brevets

**11** Publication number : **0 456 297 B1**

## EUROPEAN PATENT SPECIFICATION

**45** Date of publication of patent specification :
06.04.94 Bulletin 94/14

**51** Int. Cl.⁵ : **B65G 47/50,** B65G 17/34,
B65G 17/32

**21** Application number : **91200958.6**

**22** Date of filing : **22.04.91**

**54** Method of handling objects, in particular luggage.

**30** Priority : **08.05.90 NL 9001094**

**43** Date of publication of application :
**13.11.91 Bulletin 91/46**

**45** Publication of the grant of the patent :
**06.04.94 Bulletin 94/14**

**84** Designated Contracting States :
**AT BE CH DE DK ES FR GB GR IT LI LU NL SE**

**56** References cited :
**WO-A-86/06245**
**DE-A- 3 515 905**
**DE-A- 3 733 510**
**DE-U- 8 701 332**
**FR-A- 1 158 624**
**FR-A- 2 182 148**
**FR-A- 2 526 710**
**GB-A- 141 218**
**US-A- 3 695 462**
**US-A- 3 908 113**

**73** Proprietor : **VANDERLANDE INDUSTRIES
NEDERLAND B.V.
Vanderlandelaan 2
NL-5466 RB Veghel (NL)**

**72** Inventor : **van den Goor, Jacobus Maria
Gerwenseweg 54
NL-5674 SH Nuenen (NL)**
Inventor : **Bodewes, Hermannus Josephus
Arnoldes
Hurk 207
NL-5403 LC Uden (NL)**

**74** Representative : **Van kan, Johan Joseph
Hubert et al
Boschdijk 155
NL-5612 HB Eindhoven (NL)**

## Description

The invention relates to a method of handling objects, in particular luggage, by means of an installation provided with an endless conveyor, a supply conveyor for the supply of the objects to the endless conveyor connecting to one side of said endless conveyor, whilst a discharge conveyor for the discharge of the objects likewise connects to one side of said endless conveyor, said endless conveyor being provided with carriers, which are tiltable about pivot pins extending at least substantially in the longitudinal direction of the endless conveyor, said carriers functioning to discharge an object carried by a carrier on the discharge conveyor.

Such a method can be derived from French Patent No. 2,182,148. With this known method the objects are placed loose on the carriers and conveyed to a selected discharge conveyor by means of an endless conveyor, at which location said object is discharged on the selected discharge conveyor by tilting of the carrier in question.

When handling uneven objects, e.g. when luggage is being handled, difficulties arise when such a method is being used, in particular because it is attempted to achieve ever higher handling speeds.

It is noted, that from US-A-3,695,462 there is known a baggage handling system using holders for accomodating objects, said holders being displaced by endless conveyors. At a discharge station the conveyor is inclined by guiding the conveyor along tilted rollers or alternatively the conveyor is part of a truncated cone.

In practice it has become apparent that at least the larger part of luggage presented by air passengers shows features such as summarized in the table below.

### FEATURES OF LUGGAGE

|              | Maximum | Average | Minimum |
| ------------ | ------- | ------- | ------- |
| Weight (kg)  | 40      | 15      | 1,5     |
| Length (mm)  | 1000    | 650     | 200     |
| Width (mm)   | 750     | 400     | 75      |
| Height (mm)  | 750     | 250     | 25      |

Usually before being handled each piece of luggage is provided with a label or the like, which mentions data which are used as a guideline with the further internal transport of the piece of luggage in question. It will be apparent that as a result of the strong variations in the shapes of the pieces of luggage it is not possible to ensure a certain fixed position of the label in question, which makes it very difficult, if not impossible, to read the label by means of e.g. optical equipment or the like.

The purpose of the invention is to obtain a method wherein the drawbacks of the known equipment can be avoided.

According to the invention this can be achieved in that prior to being supplied to the endless conveyor the objects to be handled in the installation are received in holders, that said holders are secured to the carriers, that the holders and the carriers are tilted so as to remove the objects from the holders at the location of a discharge conveyor, and that the empty holders of the carriers are delivered to a further discharge conveyor.

When using the method according to the invention the objects, such as pieces of luggage, can be conveyed in holders having standard dimensions. The transport of such holders having standard dimensions can take place substantially more easily than the transport of randomly shaped objects, whilst at the same time these holders may be provided, at certain fixed places, with identifications relating to their destination, which may finally result in an efficient and fast handling of the holders and thus of the objects present in said holders.

The invention will be explained in more detail hereafter, with reference to the accompanying Figures.

Figure 1 is a diagrammatic plan view of a possible embodiment of a part of the installation according to the invention.

Figure 2 is a diagrammatic, larger-scale view of a part of the installation shown in Figure 1.

Figure 3 is a perspective, diagrammatic view of an embodiment of a holder.

Figure 4 shows the tilting of a holder.

Figure 5 diagrammatically illustrates a possibility of introducing objects into the holders.

Figure 6 diagrammatically illustrates the movement of a holder by means of a sloping conveyor belt.

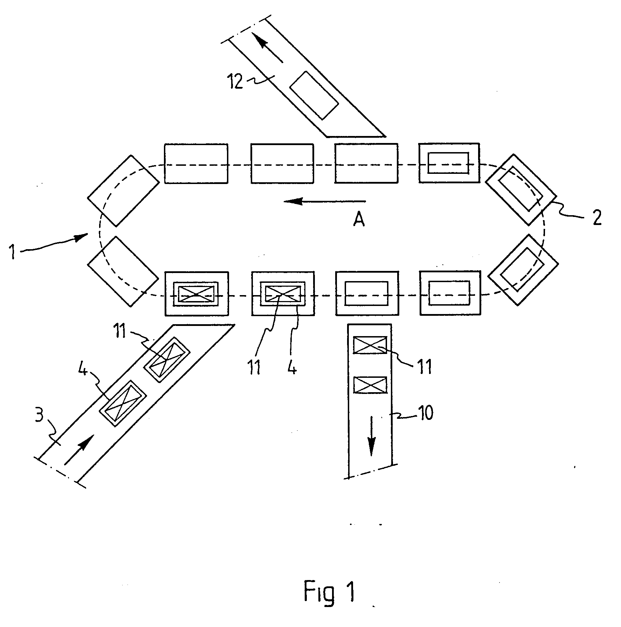

The installation shown in Figure 1 comprises an endless conveyor 1, said conveyor comprising a plurality of coupled dishes or carriers 2, which are pivotable, with the aid of means not shown, in required places about pivot pins extending in the longitudinal direction of the conveyor. The construction of such an endless conveyor provided with pivotable dishes may be of the type such as disclosed int he above-mentioned French Patent Specification No. 2,182,148. During operation said endless conveyor 1 can be driven with the aid of drive means (not shown), in such a manner that the dishes or carriers 2 will move in the direction indicated by the arrow A.

A supply conveyor 3 connects to one side of the endless conveyor 1, by means of which supply conveyor holders or boxes 4 can be supplied to the conveyor 1. The conveyor 3 may e.g. be an endless belt conveyor. Each of the boxes supplied by means of a conveyor 3 can be placed on a separate carrier or dish 2.

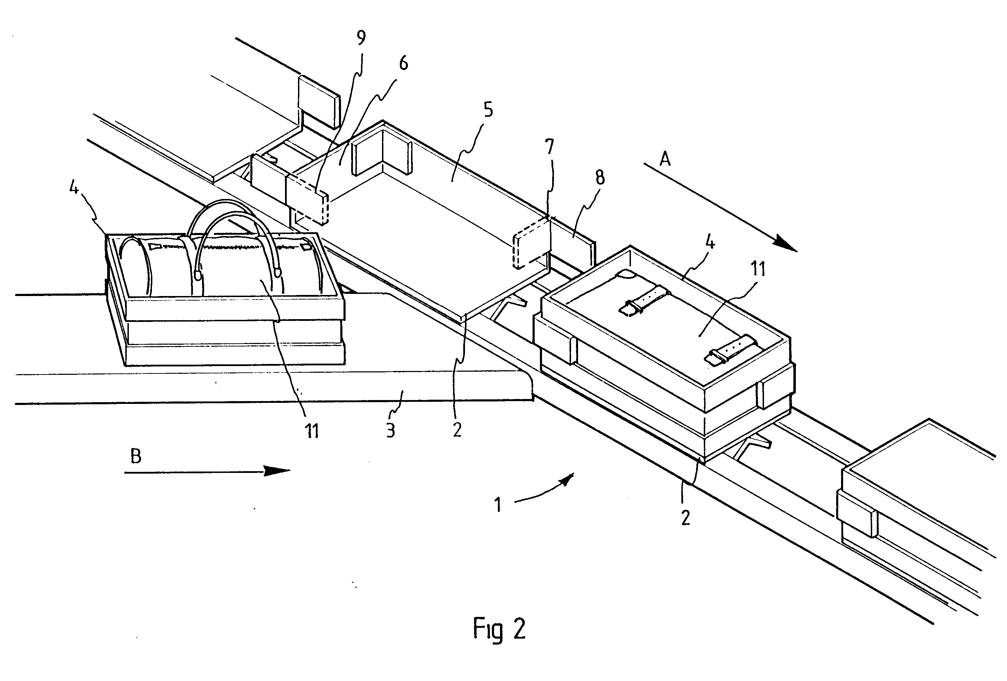

As is diagrammatically illustrated in Figure 2 the dimensions of each dish 2 are thereby adapted to the dimensions of the holder or box 4. At the side remote from the supply conveyor 3 the dish is provided with an upright side wall 5, whilst at its rear edge the dish is provided with a rear wall 6 joining up with the side wall 5. A flap 8 is connected, by means of a upwardly extending pivot pin 7, to the free front edge of the upright side wall 5, which flap may be pivoted, with the aid of operating means (not shown), between a position in which the flap 8 is in line with the side wall and a position in which the flap 8 extends parallel to the rear wall 6.

A flap 9 is coupled, by means of an upwardly extending pivot pin, to the free end of the rear wall 6 that is directed towards the supply conveyor 3, said flap being pivotable through 180° with the aid of drive means (not shown), between a position in which said flap extends from the rear wall 6 towards the rear, when seen in the direction of movement indicated by the arrow A, and a position in which said flap extends towards the front with respect to the rear wall, parallel to the side wall 5.

Upon being placed on the carrier 2 a holder or box 4 supplied in the direction according to the arrow B with the aid of the supply conveyor 3 will already be slightly pivoted in clockwise direction, when seen in Figure 2, as a result of the simultaneous movement of the carrier 2 in the direction according to the arrow A. After the holder 4 has been placed on the carrier 2 it will be pushed into its correct position with respect to the carrier 2 by pivoting of the flaps 8 and 9, and simultaneously be clamped down on the carrier 2.

At a desired discharge conveyor 10 connecting to one side of the endless conveyor 1 an object 11 present in the holder, e.g. a suitcase, a kit bag or similar piece of luggage may be deposited from the holder 4 on the discharge conveyor 10, by tilting of the carrier 2 with the holder 4 attached thereto, about the pivot pin extending in the longitudinal direction of the endless conveyor. The discharge conveyor 10 may e.g. be an endless conveyor belt, a roller conveyor, a chute or the like.

The empty holders or boxes 4 are moved towards a further discharge conveyor 12 by means of the conveyor 1, upon which, after pivoting of the flaps 8 and 9 into their open positions and possible again tilting of the carriers 2, the empty holders 4 can be delivered so as to be resupplied to a point where objects to be conveyed can be introduced into the holders or boxes 4.

Although only one supply conveyor 3 for supplying holders loaded with objects, one discharge conveyor for discharging said objects, such as luggage, and one discharge conveyor for discharging empty holders or boxes 4 are shown in Figure 1, it will be apparent that also several supply conveyors and/or discharge conveyors for the objects, such as luggage and/or several discharge conveyors for the empty holders may be connected on the endless conveyor 1.

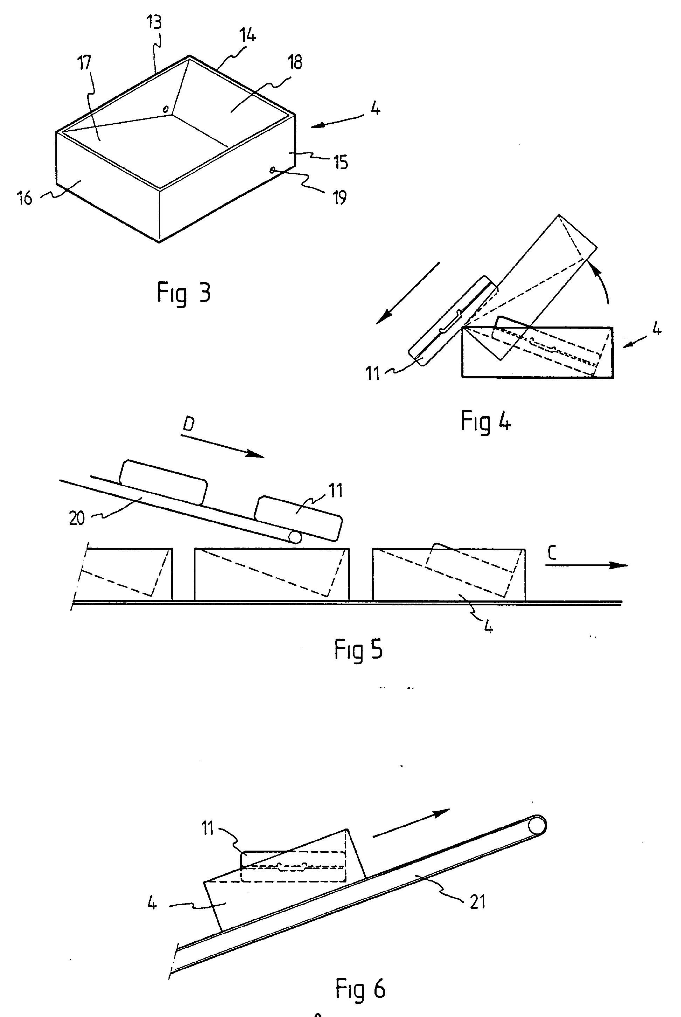

Figure 3 diagrammatically shows a preferred embodiment of a holder or box 4. As will be apparent from Figure 3 the box 4 is built up of four upright walls 13 - 16 including a rectangle. The bottom of the box is formed by a bottom plate 17 located between the side walls 13 and 15, which slopes downwards from the upper edge of the side wall 16 in the direction of the opposite wall 14. In the horizontal position of the holder 4 illustrated in Figure 4 said bottom plate 17 thereby includes an angle of ± 30° with the horizontal. A plate 18 is provided between the bottom end of the bottom plate and the upper edge of the side wall 14, said plate extending at least substantially perpendicularly to the plate 17.

It stands to reason that the box according to Figures 3 and 4 is placed on a dish 2 in such a manner that the side walls 14 and 16 extend parallel to the longitudinal direction of the conveyor 1.

As will be apparent in particular from Figure 4 a piece of luggage 11 introduced in such a holder or box will always tend to slide towards the deepest point of the box, so as to abut against the upright wall 18. Thus a good location of the piece of luggage is achieved at all times, whilst upon tilting of the box, as is likewise indicated in Figure 4, the object 11 in question can easily slide out of the box without any risk of the object becoming jammed, not even if the object in question e.g. is a weak and/or soft piece of luggage.

By providing aligned holes 19 in the confronting walls 13 and 15, near the connection point between the walls 17 and 18, it can e.g. be ascertained, with the aid of optical means or the like, whether or not an object is present in the holder or box 4 in question.

As is furthermore shown in Figure 5 the holders may be moved, at a loading station for the holders, in the -direction according to the arrow C with the aid of a conveying means, whilst the objects 11 may be supplied in the direction according to the arrow D with the aid of a further conveying means located in a higher position, such as a conveyor belt 20 or the like. The conveying means 20 may thereby be positioned at an angle corresponding with the angle of inclination of the wall part 17, as a result of which an even transfer of the objects 11 in the holders will be achieved.

As is furthermore shown in Figure 6 the holders 4 filled with the objects 11 may also be moved by means of conveyors 21 extending at a comparatively large angle of inclination, without any risk of the objects 11 moving out of the holders in question.

It will be apparent that variations and/or additions to the above-described method and device are possible within the spirit and scope of the invention. Thus it is e.g. possible to use other means for aligning and fixing the holders 4 with respect to the carriers 2. It is e.g. conceivable to use electro magnets provided on the carriers 2, which cooperate with parts of the holders 4 consisting of a material that can be magnetized. Naturally also other forms of the holders accomodating the objects are conceivable.

Although in the foregoing special attention has been paid to the application in handling luggage in airports or the like, it will be apparent that also other applications will be conceivable.

## Claims

1. A method of handling objects, in particular luggage, by means of an installation provided with an endless conveyor (1), a supply conveyor (3) for the supply of the objects (11) to the endless conveyor (1) joining to a side of said endless conveyor (1), a discharge conveyor (10) for the discharge of the objects (11) joining likewise to a side of said endless conveyor (1), said endless conveyor (1) being provided with carriers (2), which are tiltable about pivot pins extending substantially in the longitudinal direction of the endless conveyor (1), said carriers (2) functioning to discharge an object (11) carried by a carrier (2) on the discharge conveyor (10), characterised in that prior to being supplied to the endless conveyor (1) the objects (11) to be handled in the installation are received in holders (4), that said holders (4) are removably secured to the carriers (2), that the holders (4) and the carriers (2) are tilted so as to remove the objects (11) from the holders (4) at the location of the discharge conveyor (10), and that the empty holders (4) are delivered from the carriers (2) to a further discharge conveyor (12).

2. A device for carrying out the method according to claim 1, provided with an endless conveyor (1) with carriers (2) for reveicing objects (11) to be moved, characterised in that said carriers (2) are provided with means (5-9) for securing holders (4) for said objects on the carriers (2).

3. A device according to claim 2, characterised in that the carriers (2) are provided with pivotable parts (8, 9), which are pivotable between an open position suitable for supplying a holder (4) to a carrier (2), and a closed position, by means of which said pivotable parts (8, 9) secure the holders (4) with respect to the carrier (2).

4. A device according to claim 2 or 3, characterised in that there is used a holder (4) provided with upright walls (13, 16) and with two bottom parts (17, 18), which slope downwards from upper edges of confronting walls (14, 16) in a direction toward one another.

5. A device according to claim 4, characterised in that during conveying of a holder (4) by means of the endless conveyor (1) from a supply conveyor (3) to a discharge conveyor (10) the holder is held so that a bottom part (17) extends at an angle of ± 30° with respect to the horizontal, whilst the other bottom part (18) joins up with the bottom end of the former bottom part (17) at an angle of 90°.

6. A device according to claim 4 or 5, characterised in that the presence or absence of an object (11) in a holder (4) is detected by a sensor via aligned holes (19) which are provided near the lowest point of the space for receiving an object (11) in the holder (4) in confronting walls (13, 15) of the holder (4).

## Patentansprüche

1. Verfahren zur Handhabung von Gegenständen, insbesondere Gepäckstücken, mittels einer Einrichtung, die versehen ist mit einem Endlosförderer (1), einem Zuführungsförderer (3) zum Anliefern der Gegenstände (11) zu dem Endlosförderer (1), der gegen eine Seite dieses Endlosförderers (1) stößt, einen Entladeförderer (10) für das Entladen der Gegenstände (11), der gleichermaßen an eine Seite des Endlosförderers (1) stößt, wobei der Endlosförderer (1) versehen ist mit Trägern (2), welche schwenkbar sind um Drehbolzen, die sich im wesentlichen in Längsrichtung des Endlosförderers (11) erstrecken, wobei die Träger (2) zur Entladung eines von einem Träger (2) getragenen Gegenstands (11) auf dem Entladeförderer (10) funktionieren, dadurch gekennzeichnet, daß vor dem Zuführen zu dem Endlosförderer (1) die in der Einrichtung handzuhabenden Gegenstände (11) aufgenommen werden in Haltern (4), die lösbar an den Trägern (2) befestigt sind und daß die Halter (4) und die Träger (2) so kippbar sind, daß die Gegenstände (11) von den Haltern (4) an der Anbindungsstelle für den Entladeförderer (10) entfernt werden und daß die leeren Halter (4) von den Trägern (2) zu einem weiteren Entladeförderer (12) geschickt werden.

2. Vorrichtung zur Ausführung des Verfahrens nach Anspruch 1, mit einem Endlosförderer (1) mit Trägern (2) zur Aufnahme von zu bewegenden Gegenständen (11), dadurch gekennzeichnet, daß diese Träger (2) mit Mitteln (5-9) zur Sicherung der Halter (4) für diese Gegenstände auf den Trägern (2) ausgestattet sind.

3. Vorrichtung nach Anspruch 2, dadurch gekennzeichnet, daß die Träger (2) mit drehbaren Teilen (8,9) ausgestattet sind, welche drehbar sind zwischen einer offenen Stellung, geeignet für die Zuführung eines Halters (4) zu einem Träger (2) und einer geschlossenen Stellung, mittels der die drehbaren Teile (8,9) die Halter (4) im Hinblick auf den Träger (2) sichern.

4. Vorrichtung nach Anspruch 2 oder 3, dadurch gekennzeichnet, daß ein Halter (4) verwendet wird, der mit aufrechten Wänden (13,16) versehen ist und mit zwei Bodenteilen (17,18), welche von oberen Kanten gegenüberliegender Wände (14,16) in einer Richtung aufeinanderzu abfallen.

5. Vorrichtung nach Anspruch 4, dadurch gekennzeichnet, daß während der Förderung eines Halters (4) mittels des Endlosförderers (1) von einem Zufuhrförderer (3) zu einem Entladeförderer (10) der Halter so gehalten wird, daß sich ein Bodenteil (17) in einem Winkel von ± 30° zur Horizontalen erstreckt, während das andere Bodenteil (18) mit dem Bodenende des vorherigen Bodenteils (17) in einem Winkel von 90° verbunden ist.

6. Vorrichtung nach Anspruch 4 oder 5, dadurch gekennzeichnet, daß die Anwesenheit oder Abwesenheit eines Gegenstands (11) in dem Halter (4) durch einen Sensor über miteinander fluchtende Löcher (19) in der Nähe des untersten Punktes des Raumes zur Aufnahme eines Gegenstandes (11) in dem Halter (4) in gegenüberliegenden Wänden (13,15) des Halters (4) erfaßt wird.

## Revendications

1. Méthode de manutention d'objets, en particulier des bagages , au moyen d'une installation comprenant un convoyeur sans fin (1), un convoyeur d'alimentation (3) pour l'amenée des objets (11) au convoyeur sans fin (1), se raccordant à un côté dudit convoyeur sans fin (1), un convoyeur d'évacuation (10) pour l'évacuation des objets (11),se raccordant également à un côté dudit convoyeur sans fin (1), ledit convoyeur sans fin (1) étant équipé d'éléments porteurs (2) qui sont basculables autour de pivots s'étendant sensiblement dans la direction longitudinale du convoyeur sans fin (1), lesdits éléments porteurs (2) servant à décharger un objet (11) porté par un élément porteur (2) sur le convoyeur d'évacuation (10), caractérisée en ce que, avant d'être amenés au convoyeur sans fin (1), les objets (11) à transporter dans l'installation sont placés dans des réceptacles (4), en ce que lesdits réceptacles (4) sont fixés de façon séparable aux éléments porteurs (2), en ce que les réceptacles (4) et les éléments porteurs (2) sont basculés de manière à enlever les objets (11) des réceptacles (4) à l'endroit du convoyeur d'évacuation (10), et en ce que les réceptacles vides (4) sont transférés des éléments porteurs (2) à un autre convoyeur d'évacuation (12).

2. Dispositif pour la mise en oeuvre de la méthode suivant la revendication 1, comprenant un convoyeur sans fin (1) équipé d' éléments porteurs (2) pour recevoir des objets (11) à transporter, caractérisé en ce que lesdits éléments porteurs (2) sont pourvus de moyens (5,9) pour fixer des réceptacles (4) desdits objets sur les éléments porteurs (2).

3. Dispositif suivant la revendication 2, caractérisé en ce que les éléments porteurs (2) sont munis de parties pivotantes (8,9) qui peuvent pivoter entre une position ouverte, convenant pour l'amenée d'un réceptacle (4) à un élément porteur (2), et une position fermée dans laquelle lesdites parties pivotantes (8,9) bloquent les réceptacles (4) par rapport à l'élément porteur (2).

4. Dispositif suivant la revendication 2 ou 3, caractérisé en ce qu'on utilise un réceptacle (4) comprenant des parois verticales (13-16) et deux parties de fond (17,18) qui s'inclinent vers le bas et l'une vers l'autre, à partir des bords supérieurs de parois verticales opposées (14,16).

5. Dispositif suivant la revendication 4, caractérisé en ce que, pendant le transport d'un réceptacle (4) aumoyen du convoyeur sans fin (1) d'un convoyeur d'alimentation (3) à un convoyeur d'évacuation (10), le réceptacle est tenu de sorte qu'une partie de fond (17) s'étend suivant un angle de 30° par rapport à l'horizontale tandis que l'autre partie de fond (18) se raccorde avec l'extrémité inférieure de la partie de fond précédente (17) suivant un angle de 90°.

6. Dispositif suivant la revendication 4 ou 5, caractérisé en ce que la présence ou l'absence d'un objet (11) dans un réceptacle (4) est détectée par un capteur, à travers des trous alignés (9) qui sont prévus, près du point le plus bas de l'espace de réception d'un objet (11) dans le réceptacle (4), dans des parois opposées (13,15) du réceptacle (4).

Fig 1

Fig 2

EP 0 456 297 B1

8

Fig 3

Fig 4

Fig 5

Fig 6